# EUROPÄISCHE PATENTANMELDUNG

(11) **EP 3 756 931 A1**
(43) Veröffentlichungstag der Anmeldung: **30.12.2020**
(21) Anmeldenummer: 20170789.0
(22) Anmeldetag: 22.04.2020
(51) Int. Cl.: B60L 50/53, G08G 1/09

(54) **ENERGIEVERSORGUNGSSYSTEM FÜR NICHT SPURGEBUNDENE, ELEKTRISCH ANGETRIEBENE FAHRZEUGE**

(30) Priorität: 28.06.2019 DE 102019209455; 10.07.2019 DE 102019210216
(71) Anmelder: Siemens Mobility GmbH, 81739 München (DE)
(72) Erfinder: Bühs, Florian, 10777 Berlin (DE); Molthan, Helge, 83075 Bad Feilnbach (DE)

(57) **Zusammenfassung**

Die Erfindung bezieht sich auf ein Energieversorgungssystem (10) für nicht spurgebundene, elektrisch angetriebene Fahrzeuge (20) auf einem Streckenabschnitt (S) eines Straßennetzes. Es umfasst eine Oberleitungsanlage (11) mit einer oberhalb einer Fahrspur (L) des Streckenabschnitts (S) verlaufenden Fahrleitung (12) und mit einem Unterwerk (13) zur Speisung der Fahrleitung (12) mit elektrischer Energie. Dabei ist die Fahrleitung (12) durch Stromabnehmer (22) der Fahrzeuge (20) zur Energieeinspeisung kontaktierbar. Die Oberleitungsanlage (11) ist mit einer Lastgrenze für die elektrische Leistungsabgabe auf dem Streckenabschnitt (S) ausgelegt. Indem das Energieversorgungssystem (10) ein Kommunikationssystem (14) zur drahtlosen Übertragung von eine elektrische Leistungsaufnahme beschränkenden Fahranweisungen (DI) an den Streckenabschnitt (S) befahrende Fahrzeuge (20) und fahrzeugseitige Steuereinheiten (23) zur automatischen Umsetzung übertragener Fahranweisungen (DI) in Leistung aufnehmenden Komponenten (21) der Fahrzeuge (20) und/oder fahrzeugseitige Ausgabeeinheiten (25) zur Ausgabe übertragener Fahranweisungen (DI) an Fahrer der Fahrzeuge (20) umfasst, kann die Steuerung der Lastaufnahme in dem Streckenabschnitt (S) verbessert werden.

## Beschreibung

Die Erfindung betrifft ein Energieversorgungssystem für nicht spurgebundene, elektrisch angetriebene Fahrzeuge auf einem Streckenabschnitt eines Straßennetzes nach dem Oberbegriff des Patentanspruches 1.

Ein derartiges Energieversorgungssystem umfasst eine Oberleitungsanlage mit einer oberhalb einer Fahrspur des Streckenabschnitts verlaufenden Fahrleitung und mit einem Unterwerk zur Speisung der Fahrleitung mit elektrischer Energie. Dabei ist die Fahrleitung durch Stromabnehmer der Fahrzeuge zur Energieeinspeisung kontaktierbar. Die Oberleitungsanlage ist mit einer Lastgrenze für die elektrische Leistungsabgabe auf dem Streckenabschnitt ausgelegt.

Aus der Patentschrift EP 2 755 852 B1 ist ein System zur Verkehrssteuerung von elektrisch getriebenen Fahrzeugen in einem Straßennetz bekannt. Die Fahrzeuge sind zur Energieübertragung während der Fahrt mit einem straßenseitig angeordneten Fahrleitungsnetz koppelbar. Das Fahrleitungsnetz weist getrennt voneinander versorgte Speiseabschnitte mit auslegbaren Lastgrenzen auf. Das System umfasst Prognosemittel, welche den Lastbedarf in einem Speiseabschnitt aus einer erfassten Verkehrs- und Wettersituation sowie aus einem Verlauf der Straßenneigung des Straßenabschnitts anhand eines Prognosemodells berechnet. Das Prognosemodell gibt die Lastaufnahme eines Fahrzeugs in Abhängigkeit des Gesamtgewichts sowie der Geschwindigkeit und Beschleunigung eines Fahrzeugs an. Das System umfasst ferner Steuerungsmittel zur Bewertung des prognostizierten Lastbedarfs hinsichtlich der Lastgrenze und zur Auswahl von erforderlichen Steuerungseingriffen für Beeinflussungsmittel des Systems. Die Beeinflussungsmittel können durch straßenseitige Aktorikeinrichtungen, wie Wechselverkehrszeichen oder Lichtsignalanlagen, gebildet sein. Als Fahrerhinweis kann ausgewählt werden eine Aufforderung zur Umstellung von Elektro- auf Kraftstoffantrieb, eine Aufforderung zur Umstellung der Lastaufnahme vom Fahrleitungsnetz auf einen fahrzeugseitigen Energiespeicher oder eine Aufforderung zur Rückspeisung von Energie aus einem fahrzeugseitigen Energiespeicher in das Fahrleitungsnetz.

Der Erfindung liegt die Aufgabe zugrunde ein Energieversorgungssystem der eingangs genannten Art bereitzustellen, mit dem die Steuerung der Lastaufnahme in einem Streckenabschnitt verbessert werden kann.

Die Aufgabe wird erfindungsgemäß gelöst durch ein gattungsgemäßes Energieversorgungssystem mit den im kennzeichnenden Teil des Patentanspruches 1 angegebenen Merkmalen. Demnach umfasst das Energieversorgungssystem ein Kommunikationssystem zur drahtlosen Übertragung von eine elektrische Leistungsaufnahme beschränkenden Fahranweisungen an den Streckenabschnitt befahrende Fahrzeuge. Ferner umfasst es fahrzeugseitige Steuereinheiten zur automatischen Umsetzung übertragener Fahranweisungen in Leistung aufnehmenden Komponenten der Fahrzeuge. So kann das Fahrzeug den Antrieb selbstständig in einen Economy-Modus umschalten, oder die Leistung nur für den Antrieb und nicht auch zum Laden eines Energiespeichers nutzen, oder die Leistungsaufnahme aus der Fahrleitung stoppen und den Antrieb aus einem fahrzeugseitigen Energiespeicher oder Dieselgenerator versorgen; ebenso kann als Komponente die Klimaanlage reduziert oder abgeschaltet werden. Gleichzeitig oder alternativ umfasst das Energieversorgungssystem fahrzeugseitige Ausgabeeinheiten zur Ausgabe übertragener Fahranweisungen an Fahrer der Fahrzeuge. Die Ausgabeeinheit kann dabei die Fahranweisung optisch und/oder akustisch an den Fahrer des Fahrzeugs ausgeben. Die Ausgabeeinheit kann ein Rundfunkgerät mit Traffic Message Channel, ein Navigationsgerät oder eine eigens hierfür vorgesehene On-Board-Unit sein. So können Fahrern Fahranweisung zur maximal zulässigen Leistungsaufnahme angezeigt werden und - falls diese nicht automatisch durch die Steuereinheit umgesetzt werden - diese durch Reduktion oder Abschalten der Ladeleistung, durch Abschalten zusätzlicher Verbraucher oder durch Reduktion der Traktionsleistung umsetzen. Hierdurch wird eine direkte Beeinflussung des Fahrers eines Fahrzeugs bei der Benutzung einer elektrifizierten Strecke zur Optimierung der Leistungsaufnahme im Sinne einer Leistungsregelung der Energieversorgung erreicht, was eine engere Auslegung der Oberleitungsanlage, eine Reduktion von Leistungsspitzen und eine flexiblere Anpassung des Energienetzes nach Verfügbarkeit und Bedarf ermöglicht. Dies vermindert wiederum Installations- und Betriebskosten bei dem erfindungsgemäßen Energieversorgungssystem.

In einer vorteilhaften Ausführungsform des erfindungsgemäßen Energieversorgungssystems weist das Kommunikationssystem eine streckenseitige Kommunikationseinheit und fahrzeugseitige Kommunikationseinheiten auf. Die fahrzeugseitige Kommunikationseinheit ist dabei mit der Steuereinheit und /oder der Ausgabeeinheit im Fahrzeug gekoppelt. Die streckenseitige Kommunikationseinheit kann beispielsweise an einem Streckenabschnitt mit eingeschränkter Leistungsverfügbarkeit und/oder mit erhöhtem Leistungsbedarf angeordnet sein, um dem Fahrer eines die streckenseitige Kommunikationseinheit passierenden Fahrzeugs einen Fahrerhinweis auszugeben, damit die Leistungsaufnahme vermindern kann - beispielsweise zu Beginn eines Streckenabschnitts mit einer Fahrbahnsteigung oder mit hoher Verkehrsstärke.

In einer weiteren vorteilhaften Ausführungsform des erfindungsgemäßen Energieversorgungssystems ist die streckenseitige Kommunikationseinheit als RFID-Tag mit einer Speichereinheit für Fahranweisungen ausgebildet, wobei die fahrzeugseitige Kommunikationseinheit als RFID-Leser ausgebildet ist, der bei Passage der streckenseitigen Kommunikationseinheit zum drahtlosen Auslesen der gespeicherten Fahranweisung eingerichtet ist. Bei dem RFID-System (RFID kurz für: Radio Frequency Identification) handelt es sich um ein berührungsloses Identifikationssystem mittels elektromagnetischer Wellen, welches kostengünstig ist und eine geringe Größe aufweist. Der RFID-Tag oder RFID-Transponder befindet sich an der Strecke und enthält eine identifizierende Kennung, die das im Fahrzeug mitgeführte RFID-Lesegerät bei Passage ausliest. Ferner wird der im Speicher des RFID-Tags hinterlegte Fahrerhinweis ausgelesen, um ihn durch das fahrzeugseitige Ausgabeeinheit auszugeben.

In einer weiteren vorteilhaften Ausführungsform des erfindungsgemäßen Energieversorgungssystems ist die streckenseitige Kommunikationseinheit zur aktiven Übertragung von Fahranweisungen über zweckgebundene Nahbereichskommunikation nach dem Protokoll IEEE 802.11p (WLAN) ausgebildet. Die auf IEEE 802.11p basierende, so genannte Dedicated Short Range Communication (DSRC) ist bereits heute für den Einsatz in V2X-Kommunikationssystemen (V2X: kurz für Vehicle-to-Infrastructure/Vehicle, also die Kommunikation zwischen Fahrzeugen und Infrastruktur und/oder anderen Fahrzeugen), auch in anspruchsvollen V2X-Anwendungsfällen, geeignet. Im Vergleich zu Mobilfunkbasierten Diensten setzt DSRC nicht das Vorhandensein eines Netzwerks voraus, sondern ermöglicht eine direkt Kommunikation, um die Fahrhinweise von der streckenseitigen zur fahrzeugseitigen Kommunikationseinheit zu übertragen. Im Hinblick auf Sicherheitsanforderungen bietet DSRC ebenfalls Vorteile gegenüber Mobilfunk-Lösungen.

In einer weiteren vorteilhaften Ausführungsform des erfindungsgemäßen Energieversorgungssystems ist das Kommunikationssystem zur aktiven Übertragung von Fahranweisungen über ein Mobilfunknetz nach dem Standard C-V2X oder 5G ausgebildet. Sobald die Mobilfunk-Infrastruktur und -Endgeräte aktualisiert sind und 5G unterstützen, kann von deren hoher Verfügbarkeit auch für die Übertragung von Fahranweisungen Gebrauch gemacht werden.

In einer weiteren vorteilhaften Ausführungsform umfasst das erfindungsgemäße Energieversorgungssystem eine Steuerzentrale, die dazu eingerichtet ist, Fahranweisungen für den Streckenabschnitt zu erzeugen und über das Kommunikationssystem zu übertragen. Hierdurch ist man nicht auf vordefiniert gespeicherte Fahranweisungen festgelegt, sondern kann flexibel Fahranweisungen nach Bedarf zentral erzeugen und an die den Streckenabschnitt befahrenden Fahrzeuge übertagen.

In einer weiteren vorteilhaften Ausführungsform des erfindungsgemäßen Energieversorgungssystems ist die Steuerzentrale dazu eingerichtet, die Fahranweisung dynamisch in Abhängigkeit von einer oder mehreren Gegebenheiten erzeugen. So kann eine Fahranweisung abhängig von einem aktuellen Leistungsbedarf auf dem Streckenabschnitt erzeugt werden, beispielsweise wenn ein Streckenabschnitt aufgrund einer Fahrbahnsteigung einen erhöhten Leistungsbedarf der bergauf fahrenden Fahrzeuge erfordert. Die Fahranweisung kann auch die aktuellen Betriebsdaten des Unterwerks berücksichtigen, indem eine Beschränkung der fahrzeugseitigen Leistungsaufnahme aufgrund eines unterwerkseiteigen Engpasses an bereitgestellter Traktionsleistung geboten ist. Ebenso kann bei der Fahranweisung die aktuelle oder prognostizierte Verkehrsdichte auf dem Streckenabschnitt berücksichtig werden, so dass bei einer erhöhten Anzahl an Fahrzeugen die bezogene Leistung zu reduzieren ist, um die Lastgrenze des Speiseabschnitts nicht zu überschreiten. Eine Beschränkung der Leistungsaufnahme kann auch durch gezielt an Fahrzeuge einer bestimmten Fahrzeugklasse gerichtete Fahranweisungen erreicht werden, indem beispielsweise schwere Nutzfahrzeuge ab einer vorgebbaren Gesamtgewicht zur Leistungsbeschränkung aufgefordert werden. Des Weiteren können aktuelle Wetterdaten auf dem Streckenabschnitt ebenso wie eine aktuelle Temperatur der Fahrleitung bei der Ausgabe einer Fahranweisung zur Leistungsbeschränkung berücksichtigt werden.

In einer weiteren vorteilhaften Ausführungsform des erfindungsgemäßen Energieversorgungssystems ist die Steuerzentrale dazu eingerichtet, eine Fahranweisung zu erzeugen, die eine Begrenzung der Leistungsaufnahme über einen maximal zulässige Leistungsaufnahme vorgibt, oder die zu einer Reduktion der Leistungsaufnahme auffordert, oder die im Extremfall sogar eine Leistungsaufnahme aus dem Fahrleitungsnetz verbietet.

In einer weiteren vorteilhaften Ausführungsform des erfindungsgemäßen Energieversorgungssystems ist die Steuerzentrale dazu eingerichtet, die Fahranweisung mit einer Gültigkeitsbegrenzung zu erzeugen. Diese kann sich je nach Bedarf auf eine Zeitdauer und/oder auf eine Teilstrecke des Streckenabschnitts und/oder auf ein einzelnes Fahrzeug und/oder auf eine Gruppe von Fahrzeugen beziehen.

In einer weiteren vorteilhaften Ausführungsform des erfindungsgemäßen Energieversorgungssystems ist die Steuerzentrale dazu eingerichtet, die Fahranweisung als Gebot oder als Empfehlung zu erzeugen. Nähert sich die Leistungsaufnahme in einem Streckenabschnitt einem kritischen Wert, so können Fahranweisungen als Empfehlungen ausgegeben werden, um die Fahrer in Richtung einer Verminderung ihres Leistungsbezugs zu beeinflussen, ohne dass deren Nichtbeachtung geahndet wird. Wird der kritische Wert der Leistungsaufnahme erreicht, so können die Fahranweisungen als Gebote ausgegeben werden, bei deren Missachtung Fahrer geahndet werden können.

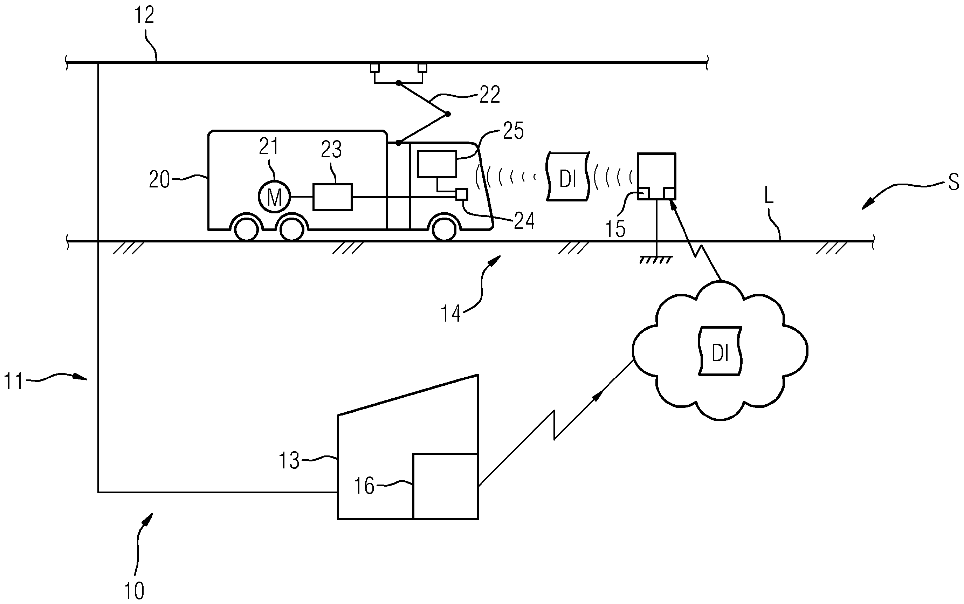

Weitere Eigenschaften und Vorteile der Erfindung ergeben sich aus nachfolgender Beschreibung eines Ausführungsbeispiels anhand der Zeichnung, in deren einziger Figur ein erfindungsgemäßes Energieversorgungssystem schematisch veranschaulicht ist.

Gemäß der einzigen Figur versorgt ein erfindungsgemäßes Energieversorgungssystem 10 nicht spurgebundene, elektrisch angetriebene Fahrzeuge 20, beispielsweise schwere Lastkraftwagen mit einem elektrischen oder hybridelektrischen Antrieb 21, auf einem Streckenabschnitt S eines Straßennetzes mit elektrischer Energie. Beispielsweise kann eine Fahrspur L einer mehrspurigen Autobahn durch eine Oberleitungsanlage 11 elektrifiziert sein. Die Oberleitungsanlage 11 umfasst eine oberhalb der Fahrspur L verlaufende Fahrleitung 12 sowie ein Unterwerk 13 zur Speisung der Fahrleitung 12 mit elektrischer Energie. Zur Leistungsaufnahme kontaktiert ein Fahrzeug 20 die Fahrleitung 12 durch einen Stromabnehmer 22 des Fahrzeugs 20 in Schleifkontakt. Die Oberleitungsanlage 11 ist mit einer Lastgrenze für die elektrische Leistungsabgabe auf dem Streckenabschnitt S ausgelegt.

Um die Lastgrenze möglichst niedrig auslegen zu können und um diese im Betrieb nicht zu überschreiten, umfasst das Energieversorgungssystem 10 erfindungsgemäß ein Kommunikationssystem 14 zur drahtlosen Übertragung von eine elektrische Leistungsaufnahme beschränkenden Fahranweisungen DI an den Streckenabschnitt S befahrende Fahrzeuge 20. Ferner umfasst es fahrzeugseitige Steuereinheiten 23 zur automatischen Umsetzung übertragener Fahranweisungen DI in Leistung aufnehmenden Komponenten, insbesondere Antrieben 21 oder Klimaanlagen, der Fahrzeuge 20. Gleichzeitig oder alternativ umfasst das Energieversorgungssystem 10 fahrzeugseitige Ausgabeeinheiten 25 zur Ausgabe übertragener Fahranweisungen DI an Fahrer der Fahrzeuge 20. Das Kommunikationssystem 14 weist eine streckenseitige Kommunikationseinheit 15 und fahrzeugseitige Kommunikationseinheiten 24 auf.

Die streckenseitige Kommunikationseinheit 15 kann als RFID-Tag mit einer Speichereinheit für Fahranweisungen DI ausgebildet sein. Dabei ist die fahrzeugseitige Kommunikationseinheit 23 als RFID-Leser ausgebildet, der bei Passage der streckenseitigen Kommunikationseinheit 15 zum drahtlosen Auslesen der gespeicherten Fahranweisung DI eingerichtet ist. Die streckenseitige Kommunikationseinheit 15 kann auch zur aktiven Übertragung von Fahranweisungen DI über zweckgebundene Nahbereichskommunikation nach dem Protokoll IEEE 802.11p (WLAN) ausgebildet sein. Alternativ kann das Kommunikationssystem 14 zur aktiven Übertragung von Fahranweisungen DI über ein Mobilfunknetz nach dem Standard C-V2X oder 5G ausgebildet sein.

Das Energieversorgungssystem 10 umfasst eine Steuerzentrale 16, die dazu eingerichtet ist, Fahranweisungen DI für den Streckenabschnitt S zu erzeugen und über das Kommunikationssystem 14 zu übertragen. Diese ist dazu eingerichtet, die Fahranweisung DI dynamisch zu erzeugen. So kann die Fahranweisung DI in Abhängigkeit von einem aktuellen Leistungsbedarf auf dem Streckenabschnitt S erzeugt werden, der bei steigenden Streckenabschnitten S höher liegt als bei einem ebenen oder gar abfallenden Streckenabschnitt S. Die Fahranweisung DI kann auch von aktuellen Betriebsdaten des Unterwerks 13 erzeugt werden, welche beispielsweise von der momentanen öffentlichen Energieversorgung abhängen können. Ebenso kann die Fahranweisung DI abhängig von einer aktuellen oder prognostizierten Verkehrsdichte auf dem Streckenabschnitt S erzeugt werden, welche ein Maß für den aktuellen beziehungsweise künftigen Lastbedarf auf dem Streckenabschnitt S darstellt. Des Weiteren kann die Fahranweisung DI in Abhängigkeit von einer Fahrzeugklasse von den Streckenabschnitt S befahrenden Fahrzeugen 20 erzeugt werden, da schwere Nutzfahrzeuge einen höheren Lastbedarf haben als leichtere. Schließlich kann die Fahranweisung DI auch von aktuellen Wetterdaten auf dem Streckenabschnitt S und/oder von einer aktuellen Temperatur der Fahrleitung 12 abhängig erzeugt werden.

Die Steuerzentrale 16 ist dazu eingerichtet, eine Fahranweisung DI zu erzeugen, welche die Fahrzeugsteuerung 23 direkt umsetzen und/oder den Fahrer über die Ausgabeeinheit 25 anweisen kann, die Leistungsaufnahme zu begrenzen oder diese fahrzeugspezifisch zu reduzieren. Die Leistungsaufnahme kann über die Fahranweisung DI auch verboten werden, so dass das Fahrzeug 20 anhalten oder auf einen alternativen Betrieb, wie zum Beispiel Economy-Modus oder Speicher- oder Dieselantrieb, umstellen muss. Die Steuerzentrale 16 ist auch dazu eingerichtet, die Fahranweisung DI mit einer Gültigkeitsbegrenzung zu erzeugen. Beispielsweise kann eine Fahranweisung DI nur für eine Zeitdauer und/oder eine Teilstrecke des Streckenabschnitts S und/oder ein einzelnes Fahrzeug 20 oder eine Gruppe von Fahrzeugen 20 erzeugt werden. Die Fahranweisung DI als beispielsweise sanktionsbehaftetes Gebot oder auch nur als Empfehlung für den Fahrer erzeugt werden, wenn der aktuelle Lastbedarf auf dem Streckenabschnitt S erst in die Nähe der Lastgrenze gerät.

## Patentansprüche

1. Energieversorgungssystem (10) für nicht spurgebundene, elektrisch angetriebene Fahrzeuge (20) auf einem Streckenabschnitt (S) eines Straßennetzes, umfassend
- eine Oberleitungsanlage (11) mit einer oberhalb einer Fahrspur (L) des Streckenabschnitts (S) verlaufenden Fahrleitung (12) und mit einem Unterwerk (13) zur Speisung der Fahrleitung (12) mit elektrischer Energie,
- wobei die Fahrleitung (12) durch Stromabnehmer (21) der Fahrzeuge (20) zur Leistungsaufnahme kontaktierbar ist, und
- wobei die Oberleitungsanlage (11) mit einer Lastgrenze für die elektrische Leistungsabgabe auf dem Streckenabschnitt (S) ausgelegt ist,
**gekennzeichnet durch**
- ein Kommunikationssystem (14) zur drahtlosen Übertragung von die elektrische Leistungsaufnahme beschränkenden Fahranweisungen (DI) an den Streckenabschnitt (S) befahrende Fahrzeuge (20), und
- fahrzeugseitige Steuereinheiten (23) zur automatischen Umsetzung übertragener Fahranweisungen (DI) in Leistung aufnehmenden Komponenten (21) der Fahrzeuge (20) und/oder fahrzeugseitige Ausgabeeinheiten (25) zur Ausgabe übertragener Fahranweisungen (DI) an Fahrer der Fahrzeuge (20).

2. Energieversorgungssystem (10) nach Anspruch 1,
- wobei das Kommunikationssystem (14) eine streckenseitige Kommunikationseinheit (15) und fahrzeugseitige Kommunikationseinheiten (24) aufweist.

3. Energieversorgungssystem (10) nach Anspruch 2,
- wobei die streckenseitige Kommunikationseinheit (15) als RFID-Tag mit einer Speichereinheit für Fahranweisungen (DI) ausgebildet ist, und
- wobei die fahrzeugseitige Kommunikationseinheit (24) als RFID-Leser ausgebildet ist, der bei Passage der streckenseitigen Kommunikationseinheit (15) zum drahtlosen Auslesen der gespeicherten Fahranweisung (DI) eingerichtet ist.

4. Energieversorgungssystem (10) nach Anspruch 2,
- wobei die streckenseitige Kommunikationseinheit (15) zur aktiven Übertragung von Fahranweisungen (DI) über zweckgebundene Nahbereichskommunikation nach dem Protokoll IEEE 802.11p (WLAN) ausgebildet ist.

5. Energieversorgungssystem (10) nach Anspruch 1, wobei das Kommunikationssystem (14) zur aktiven Übertragung von Fahranweisungen (DI) über ein Mobilfunknetz nach dem Standard C-V2X oder 5G ausgebildet ist.

6. Energieversorgungssystem (10) nach einem der vorstehenden Ansprüche, umfassend eine Steuerzentrale (16), die dazu eingerichtet ist, Fahranweisungen (DI) für den Streckenabschnitt (S) zu erzeugen und über das Kommunikationssystem (14) zu übertragen.

7. Energieversorgungssystem (10) nach Anspruch 6, wobei die Steuerzentrale (16) dazu eingerichtet ist, die Fahranweisung (DI) dynamisch in Abhängigkeit von
- einem aktuellen Leistungsbedarf auf dem Streckenabschnitt (S) und/oder
- aktuellen Betriebsdaten des Unterwerks (13) und/oder
- einer aktuellen oder prognostizierten Verkehrsdichte auf dem Streckenabschnitt (S) und/oder
- einer Fahrzeugklasse von den Streckenabschnitt (S) befahrenden Fahrzeugen (20) und/oder
- aktuellen Wetterdaten auf dem Streckenabschnitt (S) und/oder
- einer aktuellen Temperatur der Fahrleitung (12) zu erzeugen.

8. Energieversorgungssystem (10) nach Anspruch 6 oder 7, wobei die Steuerzentrale (16) dazu eingerichtet ist, eine Fahranweisung (DI) zu erzeugen, beinhaltend
- eine Begrenzung der Leistungsaufnahme oder
- eine Reduktion der Leistungsaufnahme oder
- ein Verbot der Leistungsaufnahme.

9. Energieversorgungssystem (10) nach einem der Ansprüche 6 bis 8, wobei die Steuerzentrale (16) dazu eingerichtet ist, die Fahranweisung (DI) mit einer Gültigkeitsbegrenzung auf
- eine Zeitdauer und/oder
- eine Teilstrecke des Streckenabschnitts (S) und/oder
- ein einzelnes Fahrzeug (20) und/oder
- eine Gruppe von Fahrzeugen (20)
zu erzeugen.

10. Energieversorgungssystem (10) nach einem der Ansprüche 6 bis 9, wobei die Steuerzentrale (16) dazu eingerichtet ist, die Fahranweisung (DI) als Gebot oder als Empfehlung zu erzeugen.
